# EUROPÄISCHE PATENTSCHRIFT

(11) **EP 2 916 970 B1**
(45) Veröffentlichungstag und Bekanntmachung des Hinweises auf die Patenterteilung: **16.05.2018**
(21) Anmeldenummer: 12790507.3
(22) Anmeldetag: 12.11.2012
(51) Int. Cl.: B08B 3/02

(54) **HOCHDRUCKREINIGUNGSGERÄT**
HIGH-PRESSURE CLEANING DEVICE
APPAREIL DE NETTOYAGE HAUTE PRESSION

(43) Veröffentlichungstag der Anmeldung: 16.09.2015
(73) Patentinhaber: Alfred Kärcher GmbH & Co. KG, 71364 Winnenden (DE)
(72) Erfinder: PFAFF, Peter, 73773 Aichwald (DE)
(74) Vertreter: Hoeger, Stellrecht & Partner Patentanwälte mbB
(86) Internationale Anmeldenummer: PCT/EP2012/072421
(87) Internationale Veröffentlichungsnummer: WO 2014/072000

(56) Entgegenhaltungen:
- DE-U1- 9 403 745
- DE-U1- 29 812 015
- DE-U1-202005 019 979
- US-A- 5 429 306
- US-A- 5 713 440

## Beschreibung

Die Erfindung betrifft ein Hochdruckreinigungsgerät mit den Merkmalen des Oberbegriffes von Patentanspruch 1.

Mittels derartiger Hochdruckreinigungsgeräte kann eine Reinigungsflüssigkeit, vorzugsweise Wasser, unter Druck gesetzt und auf eine zu reinigende Fläche gerichtet werden. Die Reinigungsflüssigkeit kann der Pumpe des Hochdruckreinigungsgeräts über eine Flüssigkeitszufuhrleitung zugeführt werden. Die Reinigungsflüssigkeit wird von der Pumpe unter Druck gesetzt und die unter Druck gesetzte Reinigungsflüssigkeit kann über eine Flüssigkeitsabgabeleitung, beispielsweise einen Hochdruckschlauch, abgegeben werden. Zum Verfahren des Hochdruckreinigungsgeräts auf einer Bodenfläche weist das Hochdruckreinigungsgerät mindestens zwei drehbar gelagerte Laufräder auf. Um dem Benutzer das Verfahren des Hochdruckreinigungsgerätes zu erleichtern, umfasst das Hochdruckreinigungsgerät einen Schubbügel, der zwischen einer Parkstellung und einer Betriebsstellung hin und her bewegt und vom Benutzer ergriffen werden kann. In der Parkstellung und/oder in der Betriebsstellung kann der Schubbügel arretiert werden. Hierzu kommt eine Arretierungseinrichtung zum Einsatz mit einem Arretierungsglied, das mit dem Schubbügel zusammenwirkt, um den Schubbügel zu arretieren. Durch Betätigen eines Betätigungsglieds kann das Arretierungsglied aus einer Arretierungsstellung, in der das Arretierungsglied den Schubbügel arretiert, in eine Freigabestellung bewegt werden, in der das Arretierungsglied den Schubbügel freigibt. Zur Kopplung des Betätigungsglieds mit dem mindestens einen Arretierungsglied kommt mindestens ein Kopplungsglied zum Einsatz.

Zum Montieren des Hochdruckreinigungsgeräts müssen dessen Bestandteile zusammengefügt werden, wobei keine Montagefehler auftreten dürfen.

Aus der DE 298 12 015 U1 ist ein Teleskopgriff für Gepäck bekannt, der zwei äußere rohrförmige Elemente und zwei innere rohrförmige Elemente aufweist.

Die inneren rohrförmigen Elemente sind gleitend in die äußeren rohrförmigen Elemente eingesetzt.

In der US 5,429,306 A wird ein Hochdruckreinigungsgerät beschrieben mit einem Gehäuse, an dessen Unterseite im Bereich einer Seitenkante Rollen angeordnet sind und in dem ein in das Gehäuse einschiebbarer Griff gelagert ist, der zwischen einer in das Gehäuse eingeschobenen Stellung und einer ausgezogenen Stellung verschoben und in diesen beiden Stellungen fixiert werden kann.

Ein Hochdruckreinigungsgerät mit den Merkmalen des Oberbegriffs von Patentanspruch 1 ist aus der DE 20 2005 019 979 U1 bekannt.

Aufgabe der vorliegenden Erfindung ist es, ein Hochdruckreinigungsgerät der eingangs genannten Art derart weiterzubilden, dass es kostengünstiger und einfacher montierbar ist.

Diese Aufgabe wird durch ein Hochdruckreinigungsgerät mit den Merkmalen von Patentanspruch 1 gelöst.

Die Bereitstellung einer vorgefertigten Baueinheit, die das Betätigungsglied, das mindestens eine Kopplungsglied und das mindestens eine Arretierungsglied ausbildet, erleichtert die Montage des Hochdruckreinigungsgeräts, da die vorgefertigte Baueinheit am oder im Gehäuse gelagert werden kann, ohne dass die einzelnen Bestandteile der Baueinheit in mehreren Montageschritten am Gehäuse zusammengefügt werden müssen. Vielmehr kann die komplette Baueinheit in einem einzigen Montageschritt am oder im Gehäuse positioniert werden. Die Montage des Hochdruckreinigungsgeräts kann somit in kürzerer Zeit und damit kostengünstiger erzielt werden. Darüber hinaus werden durch die Bereitstellung der vorgefertigten Baueinheit Montagefehler vermieden.

Das Betätigungsglied weist einen Betätigungsstößel auf und das mindestens eine Kopplungsglied umfasst ein erstes und ein zweites Ende, wobei es mit dem ersten Ende am Betätigungsstößel und mit dem zweiten Ende an einem Arretierungsglied angelenkt ist. Das mindestens eine Kopplungsglied ist somit einerseits mit dem Betätigungsstößel des Betätigungsglieds und andererseits mit einem Arretierungsglied gelenkig verbunden. Dies erlaubt es, eine Bewegung des Betätigungsglieds ausgehend vom Betätigungsstößel über das mindestens eine Kopplungsglied auf ein Arretierungsglied zu übertragen, wobei durch die gelenkige Verbindung des mindestens einen Kopplungsglieds einerseits mit dem Betätigungsstößel und andererseits mit einem Antriebselement auf einfache Weise eine Änderung der Bewegungsrichtung erzielt werden kann, so dass die Bewegungsrichtung des Betätigungsglieds nicht mit der Bewegungsrichtung des mindestens einen Arretierungsglieds übereinstimmen muss. Beispielsweise kann vorgesehen sein, dass das Betätigungsglied vom Benutzer in einer ersten Bewegungsrichtung bewegt werden kann und sich dadurch mindestens ein Arretierungsglied in einer zweiten Bewegungsrichtung bewegt, die im Winkel, vorzugsweise senkrecht zur ersten Bewegungsrichtung ausgerichtet ist.

Das mindestens eine Kopplungsglied ist über ein stößelseitiges Filmscharnier mit dem Betätigungsstößel einstückig verbunden. Der Betätigungsstößel und das mindestens eine Kopplungsglied bilden ein einteiliges Bauteil aus, das vorzugsweise aus einem Kunststoffmaterial gefertigt ist. Das stößelseitige Filmscharnier erlaubt es, das mindestens eine Kopplungsglied relativ zum Betätigungsstößel zu bewegen, beispielsweise zu verschwenken oder zu verschieben.

Außerdem ist das mindestens eine Kopplungsglied über ein arretierungseitiges Filmscharnier mit einem Arretierungsglied einstückig verbunden. Das mindestens eine Kopplungsglied und das mit diesem verbundene Arretierungsglied bilden ein einteiliges Bauteil aus, das vorzugsweise aus einem Kunststoffmaterial gefertigt ist. Das arretierungsseitige Filmscharniers erlaubt es, das Arretierungsglied relativ zum Kopplungsglied zu bewegen, beispielsweise zu verschwenken oder zu verschieben.

Bevorzugt ist der Schubbügel in seiner Betriebsstellung arretierbar. Dies gibt dem Benutzer die Möglichkeit, den Schubbügel zum Verfahren des Hochdruckreinigungsgerätes in seine Betriebsstellung zu bewegen und in dieser Stellung zu arretieren, so dass er anschließend den Schubbügel ergreifen kann, um das Hochdruckreinigungsgerät zu schieben oder zu drücken.

Alternativ oder ergänzend kann vorgesehen sein, dass der Schubbügel in seiner Parkstellung arretierbar ist. Dies gibt dem Benutzer die Möglichkeit, das Hochdruckreinigungsgerät am Schubbügel zu tragen, wobei der Schubbügel in der Parkstellung arretiert ist.

Der Schubbügel weist bevorzugt einen Handgriff auf, der in der Parkstellung des Schubbügels einen geringeren Abstand zum Gehäuse des Hochdruckreinigungsgerätes einnimmt als in der Betriebsstellung.

Von Vorteil ist es, wenn der Schubbügel am Gehäuse verschiebbar und/oder verschwenkbar gelagert ist.

Insbesondere kann vorgesehen sein, dass der Schubbügel um eine parallel zu einer Längsachse des Hochdruckreinigungsgerätes ausgerichtete Schiebeachse zwischen seiner Parkstellung und seiner Betriebsstellung hin und her bewegbar am Gehäuse gelagert und sowohl in der Parkstellung als auch in der Betriebsstellung arretierbar ist.

Von besonderem Vorteil ist es, wenn die vorgefertigte Baueinheit, die das Betätigungsglied, das mindestens eine Kopplungsglied und das mindestens eine Arretierungsglied ausbildet, als einteiliges Kunststoffformteil ausgestaltet ist. Die Anzahl der Bauteile des Hochdruckreinigungsgeräts kann dadurch verringert werden und dies wiederum ermöglicht eine besonders kostengünstige und einfache Montage des Hochdruckreinigungsgeräts.

Bei einer vorteilhaften Ausführungsform sind das Betätigungsglied und das mindestens eine Arretierungsglied am Gehäuse verschiebbar gelagert. Das Gehäuse weist hierzu Lagerelemente auf, die mit dem Betätigungsglied bzw. mit dem mindestens einen Arretierungsglied derart zusammenwirken, dass das Betätigungsglied und das mindestens eine Arretierungsglied relativ zum Gehäuse verschoben werden können.

Günstig ist es, wenn das Betätigungsglied entlang einer ersten Schiebeachse verschiebbar ist und das mindestens eine Arretierungsglied entlang einer zweiten Schiebeachse verschiebbar ist, wobei die zweite Schiebeachse im Winkel zur ersten Schiebeachse ausgerichtet ist.

Die erste Schiebeachse kann beispielsweise parallel zu einer Längsachse des Hochdruckreinigungsgeräts ausgerichtet sein.

Insbesondere kann vorgesehen sein, dass das Hochdruckreinigungsgerät auf einer Standfläche, beispielsweise einer Bodenfläche, mit vertikal ausgerichteter Längsachse positioniert werden kann, wobei auch die erste Schiebeachse vertikal ausgerichtet ist.

Die zweite Schiebeachse ist günstigerweise senkrecht zur ersten Schiebeachse ausgerichtet.

Es kann vorgesehen sein, dass die zweite Schiebeachse quer zu einer Längsachse des Hochdruckreinigungsgeräts ausgerichtet ist.

Zum Bewegen des mindestens einen Arretierungsglieds kann der Benutzer das Betätigungsglied betätigen. Insbesondere kann vorgesehen sein, dass der Benutzer das Betätigungsglied nach Art eines Druckknopfes verschiebt.

Von besonderem Vorteil ist es, wenn das mindestens eine Arretierungsglied entgegen der Wirkung einer federelastischen Rückstellkraft aus der Arretierungsstellung in die Freigabestellung bewegbar ist. Die Bewegung des Betätigungsglieds wird über das mindestens eine Kopplungsglied auf das mindestens eine Arretierungsglied übertragen. Durch Betätigen des Betätigungsglieds geht das Arretierungsglied von seiner Arretierungsstellung, in der es den Schubbügel fixiert, in eine Freigabestellung über, in der es den Schubbügel freigibt. Der Übergang von der Arretierungsstellung in die Freigabestellung erfolgt günstigerweise entgegen der Wirkung einer federelastischen Rückstellkraft. Eine derartige Ausgestaltung hat den Vorteil, dass das mindestens eine Arretierungsglied selbsttätig seine Arretierungsstellung einnehmen kann, wenn der Benutzer den Schubbügel in die Parkstellung oder in die Betriebsstellung bewegt. Der Schubbügel kann somit in der gewünschten Stellung selbsttätig arretiert werden. Die Bereitstellung der federelastischen Rückstellkraft erleichtert folglich die Handhabung des Hochdruckreinigungsgeräts.

Bei einer vorteilhaften Ausführungsform des erfindungsgemäßen Hochdruckreinigungsgeräts ist das mindestens eine Arretierungsglied in der Arretierungsstellung mit dem Schubbügel formschlüssig verbunden. Beispielsweise kann der Schubbügel mindestens ein Formschlusselement aufweisen, das in der Parkstellung oder in der Betriebsstellung des Schubbügels mit einem Arretierungsglied zusammenwirkt zur Herstellung einer formschlüssigen Verbindung. Das Formschlusselement kann zum Beispiel einen Vorsprung aufweisen, der zur Arretierung des Schubbügels in eine Ausnehmung eines Arretierungsglieds formschlüssig eingreift. Alternativ oder ergänzend kann vorgesehen sein, dass das mindestens eine Arretierungsglied einen Vorsprung umfasst, der zur Arretierung des Schubbügels in eine Ausnehmung des Formschlusselements eintaucht.

Günstig ist es, wenn der Schubbügel zumindest ein Paar von im Abstand zueinander angeordneten Formschlusselementen aufweist, denn dies erlaubt es, den Schubbügel in der Parkstellung und in der Betriebsstellung zu arretieren, wobei in jeder Stellung ein Formschlusselement mit einem Arretierungsglied zusammenwirkt.

Besonders vorteilhaft ist es, wenn das mindestens eine Arretierungsglied in der Arretierungsstellung mit dem Schubbügel verrastet. Das mindestens eine Arretierungsglied kann ein Rastelement ausbilden, das mit einem korrespondierenden Rastelement des Schubbügels zusammenwirkt, um den Schubbügel in einer gewünschten Stellung zu arretieren.

Bei einer vorteilhaften Ausführungsform weist das Gehäuse des Hochdruckreinigungsgeräts einen ersten Führungskanal auf, in dem ein Führungsabschnitt des Betätigungsglieds verschiebbar gehalten ist. Wie bereits erwähnt, kann beispielsweise vorgesehen sein, dass das Betätigungsglied einen Betätigungsstößel aufweist. Günstig ist es, wenn zumindest ein Abschnitt des Betätigungsstößels im ersten Führungskanal des Gehäuses verschiebbar gehalten ist.

Alternativ oder ergänzend kann vorgesehen sein, dass das Gehäuse für jedes Arretierungsglied einen zweiten Führungskanal aufweist, in dem das jeweilige Arretierungsglied verschiebbar gelagert ist. Hierbei ist es vorteilhaft, wenn jedes Arretierungsglied von einem zweiten Führungskanal vollständig aufgenommen wird, so dass der zweite Führungskanal das Arretierungsglied in Umfangsrichtung vollständig umgibt.

Der Schubbügel ist günstigerweise U-förmig ausgestaltet und weist zwei Schenkel auf, die über einen Handgriff miteinander verbunden sind, und das Gehäuse weist bevorzugt zwei dritte Führungskanäle auf, in denen jeweils ein Schenkel verschiebbar gelagert ist. Die dritten Führungskanäle sind bei einer vorteilhaften Ausführungsform der Erfindung parallel zu einer Längsachse des Hochdruckreinigungsgeräts ausgerichtet.

Die Schenkel des U-förmigen Schubbügels tragen bei einer vorteilhaften Ausführungsform der Erfindung zumindest an ihrem dem Handgriff abgewandten Ende jeweils ein erstes Formschlusselement, das in der Betriebsstellung des Schubbügels mit einem Arretierungsglied formschlüssig zusammenwirkt.

Günstigerweise tragen die Schenkel jeweils ein erstes Formschlusselement und ein im Abstand zum ersten Formschlusselement positioniertes zweites Formschlusselement, wobei das erste Formschlusselement in der Betriebsstellung des Schubbügels und das zweite Formschlusselement in der Parkstellung des Schubbügels mit einem Arretierungsglied formschlüssig zusammenwirkt.

Von Vorteil ist es, wenn die vorgefertigte Baueinheit der Arretierungseinrichtung zwei Arretierungsglieder ausbildet, die jeweils über ein Kopplungsglied mit dem Betätigungsglied gelenkig verbunden sind und zur Arretierung des Schubbügels jeweils mit einem Schenkel des Schubbügels zusammenwirken. Die Bereitstellung von zwei Arretierungsgliedern erhöht die mechanische Stabilität der Arretierung des Schubbügels. Dies verringert beispielsweise die Gefahr, dass sich der Schubbügel beim Verfahren des Hochdruckreinigungsgeräts unbeabsichtigt von seiner Betriebsstellung in seine Parkstellung bewegt.

Die beiden Arretierungsglieder sind vorteilhafterweise jeweils in einem Führungskanal des Gehäuses verschiebbar gelagert. Das Gehäuse bildet bei einer derartigen Ausführungsform der Erfindung für jedes der beiden Arretierungsglieder einen separaten Führungskanal aus, der das jeweilige Arretierungsglied aufnimmt.

Günstig ist es, wenn die beiden Arretierungsglieder entlang einer gemeinsamen Schiebeachse verschiebbar sind.

Von Vorteil ist es, wenn die gemeinsame Schiebeachse der beiden Arretierungsglieder senkrecht zu einer Längsachse des Hochdruckreinigungsgeräts ausgerichtet ist.

Bei einer vorteilhaften Ausführungsform der Erfindung führen die beiden Arretierungsglieder beim Übergang aus ihrer Arretierungsstellung in ihre Freigabestellung eine gegenläufige Bewegung aus.

Bei einer besonders bevorzugten Ausgestaltung des erfindungsgemäßen Hochdruckreinigungsgeräts sind die beiden Arretierungsglieder spiegelsymmetrisch zu einer Längsachse des Betätigungsglieds angeordnet.

Von Vorteil ist es, wenn die beiden Kopplungsglieder, über die die Arretierungsglieder jeweils mit dem Betätigungsglied verbunden sind, spiegelsymmetrisch zur Längsachse des Betätigungsglieds angeordnet sind.

Die spiegelsymmetrische Anordnung der Arretierungsglieder und/oder der Kopplungsglieder erleichtert die Montage der vorgefertigten Baueinheit der Arretierungseinrichtung. Die Gefahr von Montagefehlern wird dadurch besonders gering gehalten.

Das Gehäuse weist bei einer vorteilhaften Ausführungsform der Erfindung zwei Halbschalen auf, in denen jeweils ein Arretierungsglied verschiebbar gehalten ist. Der Einsatz von zwei Halbschalen hat eine weitere Vereinfachung der Montage des Hochdruckreinigungsgeräts zur Folge. Bei der Montage des Hochdruckreinigungsgeräts kann in jede Halbschale ein Arretierungsglied eingesetzt werden und anschließend können die beiden Halbschalen zusammengefügt werden.

Von besonderem Vorteil ist es, wenn die beiden Halbschalen gemeinsam einen Führungskanal ausbilden, in dem das Betätigungsglied verschiebbar gehalten ist. Der Führungskanal kann einen Führungsabschnitt des Betätigungsglieds in Umfangsrichtung umgeben. Der Führungskanal wird gemeinsam von den beiden Halbschalen ausgebildet. Dies ermöglicht es, das Betätigungsglied mit seinem Führungsabschnitt in den Führungskanal einzusetzen, wenn die beiden Halbschalen zusammengefügt werden.

Günstig ist es, wenn die beiden Halbschalen eine in einer Gebrauchslage des Hochdruckreinigungsgeräts vertikal ausgerichtete Trennebene definieren. Unter einer Gebrauchslage des Hochdruckreinigungsgeräts wird hierbei eine Lage des Hochdruckreinigungsgeräts verstanden, die es während des Betriebs des Hochdruckreinigungsgeräts einnehmen kann. Eine Längsachse des Hochdruckreinigungsgeräts kann in dieser Gebrauchslage beispielsweise vertikal ausgerichtet sein. Die Bereitstellung einer vertikalen Trennebene ermöglicht eine besonders einfache Montage des Hochdruckreinigungsgeräts, da die beiden Halbschalen seitlich an die Motorpumpeneinheit angesetzt werden können, um diese nach erfolgter Montage in Umfangsrichtung vollständig zu umgeben. Die Motorpumpeneinheit wird aus dem Motor und der Pumpe gebildet, die in einem vorherigen Montageschritt zusammengefügt werden können.

Günstig ist es, wenn vor dem Zusammenfügen der beiden Halbschalen jeweils ein Arretierungsglied in einen von einer Halbschale gebildeten Führungskanal eingesetzt werden kann und wenn anschließend das Betätigungsglied in einen von beiden Halbschalen gemeinsam gebildeten Führungskanal eingesetzt werden kann. Dies ermöglicht eine besonders einfache Montage des Hochdruckreinigungsgeräts.

Die nachfolgende Beschreibung einer vorteilhaften Ausführungsform der Erfindung dient im Zusammenhang mit der Zeichnung der näheren Erläuterung. Es zeigen:
- Figur 1:: eine erste perspektivische Darstellung eines erfindungsgemäßen Hochdruckreinigungsgeräts, wobei ein Schubbügel des Hochdruckreinigungsgeräts eine Parkstellung einnimmt;
- Figur 2:: eine zweite perspektivische Darstellung des Hochdruckreinigungsgeräts aus Figur 1, wobei der Schubbügel eine Betriebsstellung einnimmt;
- Figur 3:: eine perspektivische Darstellung des Hochdruckreinigungsgeräts nach Art einer Explosionszeichnung;
- Figur 4:: eine perspektivische Darstellung einer Halbschale eines Gehäuses des Hochdruckreinigungsgeräts aus Figur 1 in Kombination mit dem Schubbügel und einer Arretierungseinrichtung, wobei der Schubbügel seine Betriebsstellung einnimmt;
- Figur 5:: eine perspektivische Darstellung einer Halbschale des Gehäuses des Hochdruckreinigungsgerätes entsprechend Figur 4, wobei der Schubbügel seine Parkstellung einnimmt;
- Figur 6:: eine perspektivische Darstellung einer vorgefertigten Baueinheit der Arretierungseinrichtung, und
- Figur 7:: eine Vorderansicht der vorgefertigten Baueinheit aus Figur 6.

In der Zeichnung ist schematisch ein erfindungsgemäßes Hochdruckreinigungsgerät 10 in einer Gebrauchslage dargestellt, in der eine Längsachse 12 des Hochdruckreinigungsgeräts 10 vertikal ausgerichtet ist. Das Hochdruckreinigungsgerät 10 umfasst ein Gehäuse 14 mit einem oberen Gehäuseteil 16 und einem unteren Gehäuseteil 18, die gemeinsam eine Motorpumpeneinheit 20 mit einem Motor 22 und einer vom Motor 22 angetriebenen Pumpe 24 umgeben. Mittels der Pumpe 24 kann eine Reinigungsflüssigkeit, vorzugsweise Wasser, unter Druck gesetzt werden. Die Reinigungsflüssigkeit kann der Pumpe 24 über einen Sauganschluss 26 zugeführt werden, und die von der Pumpe 24 unter Druck gesetzte Reinigungsflüssigkeit kann von der Pumpe 24 über einen Druckanschluss 28 abgegeben werden. An den Sauganschluss 26 kann eine Saugleitung, vorzugsweise ein Saugschlauch angeschlossen werden, und an den Druckanschluss 28 kann eine Druckleitung, beispielsweise ein Druckschlauch angeschlossen werden.

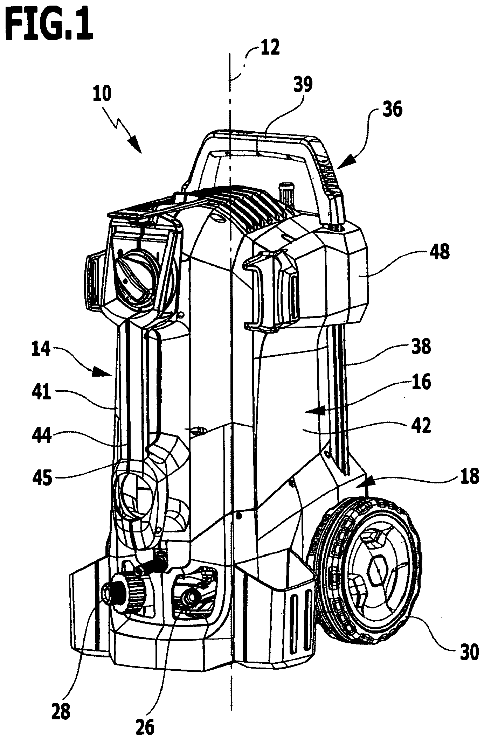

Am unteren Gehäuseteil 18 sind zwei Laufräder 30, 32 drehbar gelagert. Mittels der Laufräder 30, 32 kann das Hochdruckreinigungsgerät 10 entlang an einer Bodenfläche verfahren werden. Hierzu kann das Hochdruckreinigungsgerät 10 ausgehend von seiner in Figur 1 dargestellten Gebrauchslage, in der die Längsachse 12 vertikal ausgerichtet ist, um eine gemeinsame Drehachse 34 der beiden Laufräder 30, 32 verschwenkt werden, so dass das Hochdruckreinigungsgerät 10 anschließend nach Art einer Sackkarre verfahren werden kann.

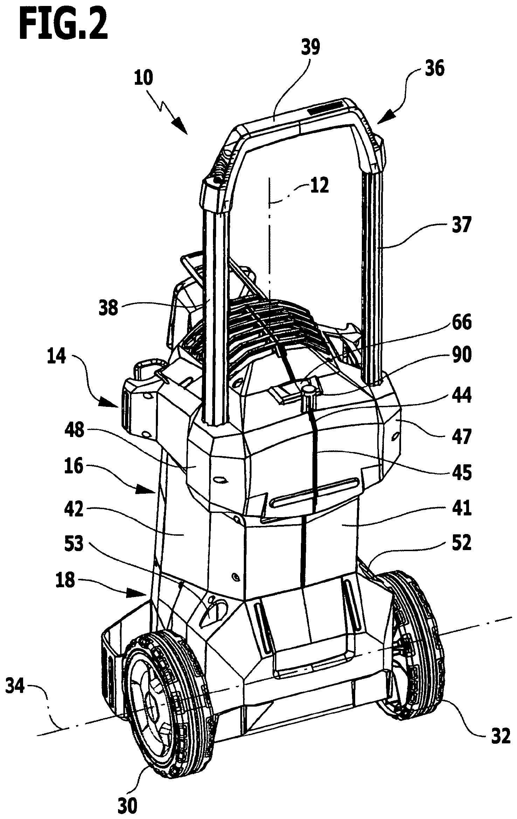

Um dem Benutzer das Verfahren des Hochdruckreinigungsgeräts 10 zu erleichtern, weist das Hochdruckreinigungsgerät 10 einen U-förmigen Schubbügel 36 auf, der zwischen einer in Figur 1 dargestellten Parkstellung und einer in Figur 2 dargestellten Betriebsstellung hin und her bewegt werden kann. Der Schubbügel 36 weist einen ersten Schenkel 37 und einen zweiten Schenkel 38 auf, die über einen Handgriff 39 starr miteinander verbunden sind. In der Betriebsstellung nimmt der Handgriff 39 einen größeren Abstand zum Gehäuse 14 ein als in der Parkstellung. Dies erleichtert es dem Benutzer, den Handgriff 39 zum Verfahren des Hochdruckreinigungsgeräts 10 in stehender Position zu ergreifen.

Das obere Gehäuseteil 16 umfasst eine erste Halbschale 41 und eine zweite Halbschale 42. Die beiden Halbschalen 41, 42 umgeben einen dem Handgriff 39 zugewandten oberen Bereich der Motorpumpeneinheit 20 in Umfangsrichtung und sind im Wesentlichen spiegelsymmetrisch zueinander ausgestaltet. Sie definieren zwischen sich eine im Wesentlichen vertikal ausgerichtete Trennebene 44, in der sie mit ihren einander zugewandten Rändern aufeinandertreffen und zwischen sich eine Trennfuge 45 ausbilden.

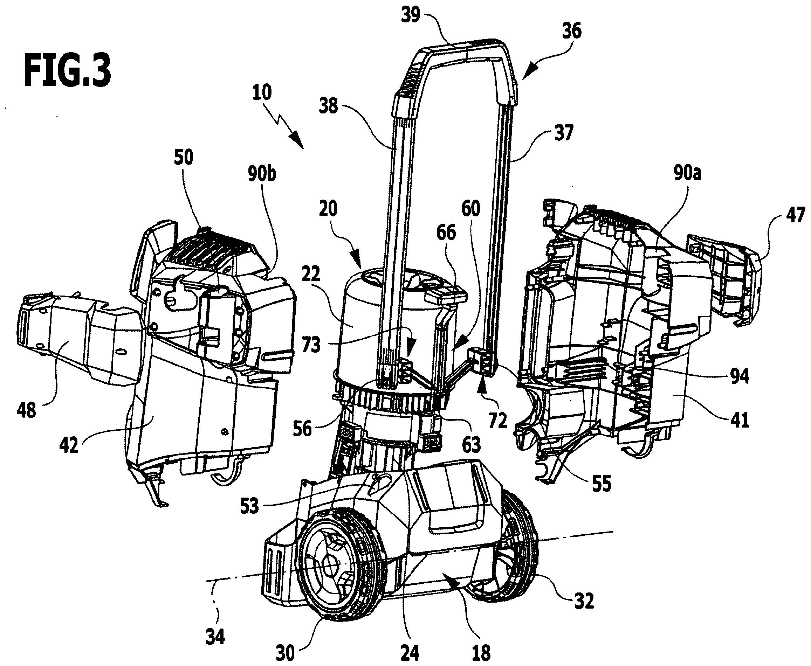

An ihren einander abgewandten Außenseiten tragen die beiden Halbschalen 41, 42 jeweils ein Abdeckteil 47 bzw. 48, das mit der jeweiligen Halbschale 41, 42 verschraubt ist. Von den Abdeckteilen 47, 48 wird jeweils ein von den Halbschalen 41 bzw. 42 ausgebildeter Führungskanal abgedeckt, in dem ein Schenkel 37 bzw. 38 des Schubbügels 36 verschiebbar gelagert ist. Ein Führungskanal 50 ist in Figur 3 schematisch dargestellt.

Fluchtend zu den Führungskanälen 50 weist das untere Gehäuseteil 18 jeweils eine köcherartige Aufnahme 52, 53 auf. Nimmt der Schubbügel 36 seine Parkstellung ein, so taucht in jede Aufnahme 52, 53 ein Endbereich der Schenkel 37, 38 ein. Wird der Schubbügel 36 in seine Betriebsstellung bewegt, so tauchen die freien Enden der Schenkel 37, 38 aus den Aufnahmen 52, 53 auf und nehmen eine Position in Höhe der Führungskanäle 50 ein.

An den freien Enden der Schenkel 37, 38 ist jeweils ein erstes Formschlusselement 55 bzw. 56 gehalten, mit dessen Hilfe der Schubbügel 36 in seiner Betriebsstellung arretiert werden kann. Im Abstand zum ersten Formschlusselement 55 bzw. 56 ist an jedem Schenkel 37, 38 ein zweites Formschlusselement 57 gehalten, mit dessen Hilfe der Schubbügel 36 in seiner Parkstellung arretiert werden kann.

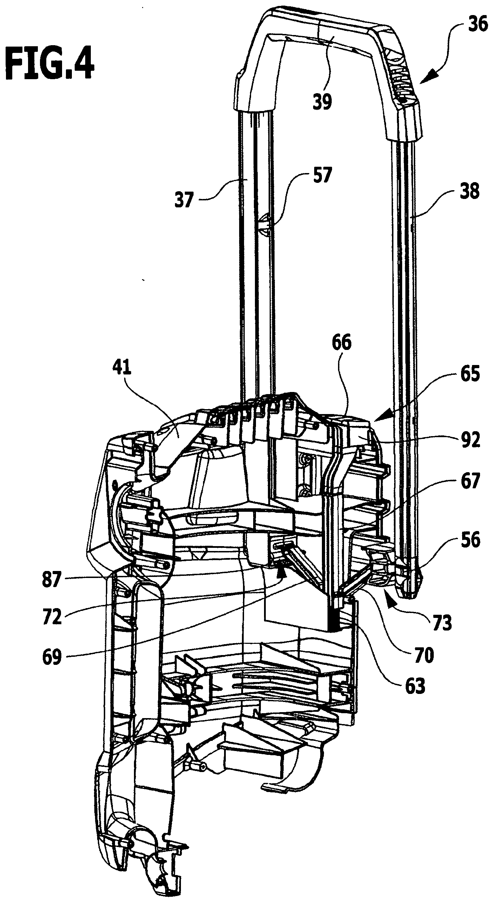

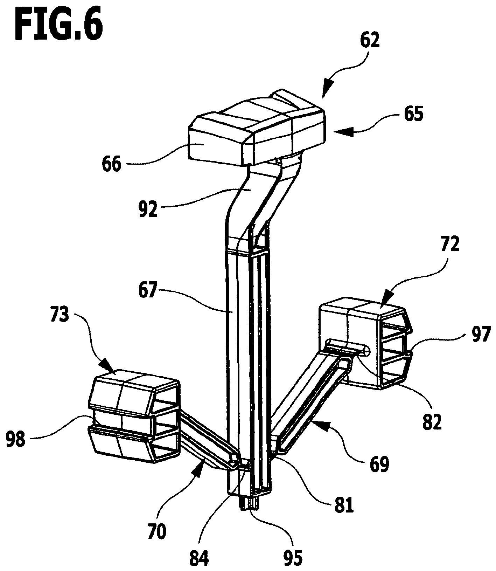

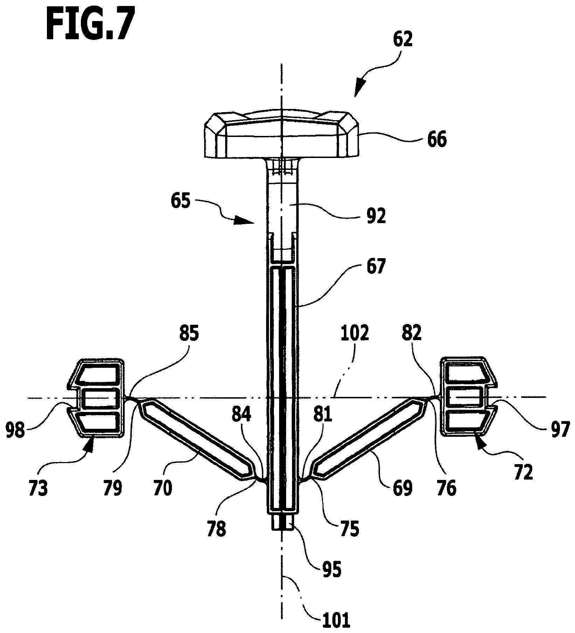

Zur Arretierung des Schubbügels 36 weist das Hochdruckreinigungsgerät 10 eine Arretierungseinrichtung 60 auf, die von einer in den Figuren 6 und 7 vergrößert dargestellten Arretierungseinheit 62 und einer in den Figuren 3 und 4 dargestellten Rückstellfeder 63 gebildet wird.

Die Arretierungseinheit 62 ist als vorgefertigte Baueinheit in Form eines Kunststoffformteils ausgestaltet. Sie weist ein Betätigungsglied 65 auf mit einem Betätigungskopf 66 und einem sich daran einstückig anschließenden Betätigungsstößel 67, sowie ein erstes und ein zweites Kopplungsglied 69, 70, über die der Betätigungsstößel 67 mit einem ersten beziehungsweise mit einem zweiten Arretierungsglied 72, 73 gelenkig verbunden ist. Die beiden Kopplungsglieder 69, 70 sind identisch ausgebildet. Das erste Kopplungsglied 69 hat ein erstes Ende 75 und ein zweites Ende 76 und das zweite Kopplungsglied 70 hat ein erstes Ende 78 und ein zweites Ende 79. An das erste Ende 75 des ersten Kopplungsglieds 69 schließt sich ein erstes Filmscharnier 81 an, über das das erste Kopplungsglied 69 mit dem Betätigungsstößel 67 einstückig und gelenkig verbunden ist. An das zweite Ende 76 des ersten Kopplungsglieds 69 schließt sich ein zweites Filmscharnier 82 an, über das das erste Kopplungsglied 69 einstückig und gelenkig mit dem ersten Arretierungsglied 72 verbunden ist.

In entsprechender Weise schließt sich an das erste Ende 78 des zweiten Kopplungsglieds 70 ein drittes Filmscharnier 84 an, über das das zweite Kopplungsglied 70 einstückig und gelenkig mit dem Betätigungsstößel 67 verbunden ist, und an das zweite Ende 79 des zweiten Kopplungsglieds 70 schließt sich ein viertes Filmscharnier 85 an, über das das zweite Kopplungsglied 70 einstückig und gelenkig mit dem zweiten Arretierungsglied 73 verbunden ist.

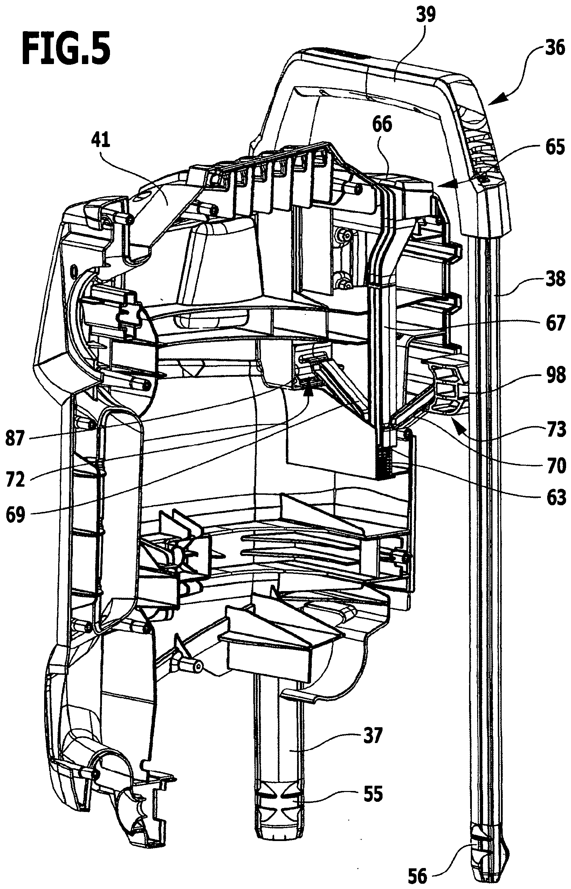

Die erste Halbschale 41 bildet einen in den Figuren 4 und 5 erkennbaren Führungskanal 87 für das erste Arretierungsglied 72 aus, und in identischer Weise bildet die zweite Halbschale 42 einen in der Zeichnung nicht erkennbaren Führungskanal für das zweite Arretierungsglied 73 aus.

Die beiden Halbschalen 41 und 42 bilden jeweils eine Kanalhälfte 90a beziehungsweise 90b eines gemeinsamen Führungskanals 90 aus, der den Betätigungskopf 66 sowie einen sich an den Betätigungskopf 66 unmittelbar anschließenden Führungsabschnitt 92 des Betätigungsstößels 67 aufnimmt. Dies wird insbesondere aus den Figuren 4 und 5 deutlich.

Der Betätigungsstößel 67 trägt an seinem dem Betätigungskopf 66 abgewandten unteren Ende einen Haltezapfen 95, an dem die als Schraubenfeder ausgebildete Rückstellfeder 63 festgelegt ist. Die Rückstellfeder 63 nimmt eine Position in einer Federaufnahme ein, die von den beiden Halbschalen 41, 42 gebildet wird und die fluchtend zum gemeinsamen Führungskanal 90 ausgerichtet ist.

Die Rückstellfeder 63 übt auf den Betätigungsstößel 67 eine vertikal nach oben gerichtete Federkraft aus, die über die Kopplungsglieder 69, 70 auf die Arretierungsglieder 72, 73 übertragen wird. Aufgrund der federelastischen Rückstellkraft werden die Arretierungsglieder 72, 73 gegen die Schenkel 37 bzw. 38 des Schubbügels 36 gedrückt. Die Arretierungsglieder 72, 73 weisen jeweils eine U-förmige Rastaufnahme 97, 98 auf, die einem Schenkel 37 bzw. 38 zugewandt ist. Nimmt der Schubbügel 36 seine Betriebsstellung ein, dann wirken die Rastaufnahmen 97, 98 jeweils mit einem korrespondierenden Rastvorsprung der ersten Formschlusselemente 55, 56 formschlüssig zusammen. Dadurch kann der Schubbügel 36 in seiner Betriebsstellung arretiert werden. Nimmt der Schubbügel 36 seine Parkstellung ein, dann wirken die Rastaufnahmen 97, 98 jeweils mit einem korrespondierenden Rastvorsprung der zweiten Formschlusselemente 57 formschlüssig zusammen. Dadurch kann der Schubbügel 36 in seiner Parkstellung arretiert werden.

Soll die Arretierung des Schubbügels 36 gelöst werden, so betätigt der Benutzer das Betätigungsglied 65, wobei er den Betätigungskopf 66 und mit diesem auch den Betätigungsstößel 67 entlang einer ersten Schiebeachse 101 vertikal nach unten drückt entgegen der Wirkung der Rückstellfeder 63. Der Führungsabschnitt 92 des Betätigungsstößels 67 wird hierbei im Führungskanal 90 entlang der ersten Schiebeachse 101 verschoben. Die Bewegung des Betätigungsstößels 67 entlang der ersten Schiebeachse 101 vertikal nach unten entgegen der Wirkung der Rückstellfeder 63 hat zur Folge, dass die beiden Arretierungsglieder 72, 73 in den Führungskanälen 87 entlang einer zweiten Schiebeachse 102, die senkrecht zur ersten Schiebeachse 101 ausgerichtet ist, auf einander zu verschoben werden, so dass die Arretierungsglieder 72, 73 einen Abstand zu den Formschlusselementen 55, 56 bzw. 57 einnehmen und diese freigeben. Dadurch wird die Arretierung des Schubbügels 36 gelöst. Anschließend kann der Benutzer den Schubbügel 36 verschieben.

Durch Betätigen des Betätigungsglieds 65 können somit die Arretierungsglieder 72, 73 ausgehend von ihrer Arretierungsstellung, in der sie mit den Formschlusselementen 55, 56 bzw. 57 einen Formschluss ausbilden, entgegen der Wirkung der Rückstellfeder 63 in eine Freigabestellung verschoben werden, in der sie die Formschlusselemente 55, 56 bzw. 57 freigeben.

Die Arretierungsglieder 72, 73 werden von der Rückstellfeder 63 mit einer Federkraft beaufschlagt, unter deren Wirkung sie selbsttätig eine Position an den Schenkeln 37, 38 des Schubbügels 36 einnehmen. Wird der Schubbügel 36 von seiner Parkstellung in seine Betriebsstellung bewegt, so gleiten die Arretierungsglieder 72, 73 so lange an den Schenkeln 37, 38 entlang, bis sie auf die ersten Formschlusselemente 55, 56 treffen und unter der Wirkung der Rückstellfeder 63 mit den ersten Formschlusselementen 55, 56 selbsttätig einen Formschluss ausbilden, so dass der Schubbügel 36 in seiner Betriebsstellung arretiert ist. Wird der Schubbügel 36 von seiner Betriebsstellung in seine Parkstellung bewegt, so gleiten die Arretierungsglieder 72, 73 so lange an den Schenkeln 37, 38 entlang, bis sie auf die zweiten Formschlusselemente 57 treffen und unter der Wirkung der Rückstellfeder 63 mit den zweiten Formschlusselementen 57 selbsttätig einen Formschluss ausbilden, so dass der Schubbügel 36 in seiner Parkstellung arretiert ist. Die Arretierung des Schubbügels in der Parkstellung und in der Betriebsstellung erfolgt somit mittels der Arretierungseinrichtung 60 selbsttätig, sobald der Schubbügel 36 die jeweilige Stellung erreicht hat. Zum Lösen der Arretierung hat der Benutzer das Betätigungsglied 65 zu betätigen.

Wie bereits erwähnt, ist die aus dem Betätigungsglied 65, den beiden Kopplungsgliedern 69, 70, den beiden Arretierungsgliedern 72, 73 sowie den Filmscharnieren 81, 82, 84, 85 bestehende Arretierungseinheit in Form eines einteiligen Kunststoffformteils ausgestaltet und bildet eine vorgefertigte Baueinheit aus. Diese kann bei der Montage des Hochdruckreinigungsgeräts 10 auf einfache Weise am Gehäuse 14 montiert werden. Hierzu wird die Rückstellfeder 63 auf die Federhalterung 95 aufgesetzt und in die Führungskanäle 87 der beiden Halbschalen 41, 42 wird jeweils ein Arretierungsglied 72, 73 eingeführt. Beim Zusammenfügen der beiden Halbschalen 41, 42 nimmt der Führungsabschnitt 92 des Betätigungsstößels 67 eine Position im gemeinsamen Führungskanal 90 der beiden Halbschalen 41, 42 ein und die Rückstellfeder 63 nimmt eine Position in der von den beiden Halbschalen 41, 42 gebildeten Federaufnahme ein. Die beiden Halbschalen 41, 42 können anschließend miteinander verschraubt werden. In einem nachfolgenden Montageschritt kann der Schubbügel 36 mit seinen beiden Schenkeln 37, 38, an denen jeweils bereits ein zweites Formschlusselement 57 festgelegt ist, in die Führungskanäle 50 eingesetzt werden, so dass die freien Enden der Schenkel 37, 38 nach unten aus den Führungskanälen 50 herausragen. Es können dann die ersten Formschlusselemente 55, 56 an den freien Enden der Schenkel 37, 38 fixiert werden. In einem nachfolgenden Montageschritt können an die einander abgewandten Außenseiten der Halbschalen 41, 42 die Abdeckteile 47 bzw. 48 angeschraubt werden. Die Montage des Hochdruckreinigungsgeräts 10 gestaltet sich somit verhältnismäßig einfach und die Gefahr von Montagefehlern ist gering.

## Patentansprüche

1. Hochdruckreinigungsgerät mit einem Gehäuse (14), in dem ein Motor (22) und eine vom Motor (22) angetriebene Pumpe (24) für eine Reinigungsflüssigkeit angeordnet sind, und mit mindestens zwei drehbar gelagerten Laufrädern (30, 32) zum Verfahren des Hochdruckreinigungsgeräts, einem zwischen einer Parkstellung und einer Betriebsstellung hin und her bewegbaren Schubbügel (36) und einer Arretierungseinrichtung (60) zum lösbaren Arretieren des Schubbügels (36) in der Parkstellung und/oder in der Betriebsstellung, wobei die Arretierungseinrichtung (60) ein Betätigungsglied (65) aufweist, das über mindestens ein Kopplungsglied (69, 70) mit mindestens einem mit dem Schubbügel (36) zusammenwirkenden Arretierungsglied (72, 73) gekoppelt ist, das durch Betätigen des Betätigungsglieds (65) aus einer Arretierungsstellung in eine Freigabestellung bewegbar ist, wobei die Arretierungseinrichtung (60) eine vorgefertigte Baueinheit (62) umfasst, die das Betätigungsglied (65), das mindestens eine Kopplungsglied (69, 70) und das mindestens eine Arretierungsglied (72, 73) ausbildet und am oder im Gehäuse (14) bewegbar gelagert ist und wobei das Betätigungsglied (65) einen Betätigungsstößel (67) aufweist und dass das mindestens eine Kopplungsglied (69, 70) ein erstes und ein zweites Ende (75, 76; 78, 79) umfasst, wobei es mit dem ersten Ende (75; 78) am Betätigungsstößel (67) und mit dem zweiten Ende (76; 79) an einem Arretierungsglied (72, 73) angelenkt ist, **dadurch gekennzeichnet, dass** das mindestens eine Kopplungsglied (69, 70) über ein stößelseitiges Filmscharnier (81, 84) mit dem Betätigungsstößel (67) einstückig verbunden ist und dass das mindestens eine Kopplungsglied (69, 70) über ein arretierungsseitiges Filmscharnier (82, 85) mit einem Arretierungsglied (72, 73) einstückig verbunden ist.

2. Hochdruckreinigungsgerät nach Anspruch 1, **dadurch gekennzeichnet, dass** die vorgefertigte Baueinheit (62) als einteiliges Kunststoffformteil ausgestaltet ist.

3. Hochdruckreinigungsgerät nach Anspruch 1 oder 2, **dadurch gekennzeichnet, dass** das Betätigungsglied (65) und das mindestens eine Arretierungsglied (72, 73) am Gehäuse (14) verschiebbar gelagert sind.

4. Hochdruckreinigungsgerät nach Anspruch 3, **dadurch gekennzeichnet, dass** das Betätigungsglied (65) entlang einer ersten Schiebeachse (101) verschiebbar ist und dass das mindestens eine Arretierungsglied (72, 73) entlang einer zweiten Schiebeachse (102) verschiebbar ist, wobei die zweite Schiebeachse (102) im Winkel zur ersten Schiebeachse (101) ausgerichtet ist.

5. Hochdruckreinigungsgerät nach Anspruch 4, **dadurch gekennzeichnet, dass** die zweite Schiebeachse (102) senkrecht zur ersten Schiebeachse (101) ausgerichtet ist.

6. Hochdruckreinigungsgerät nach Anspruch 4 oder 5, **dadurch gekennzeichnet, dass** die erste Schiebeachse (101) parallel zu einer in einer Gebrauchslage des Hochdruckreinigungsgeräts (10) vertikal ausgerichteten Längsachse (12) des Hochdruckreinigungsgeräts (10) ausgerichtet ist.

7. Hochdruckreinigungsgerät nach einem der voranstehenden Ansprüche, **dadurch gekennzeichnet, dass** das mindestens eine Arretierungsglied (72, 73) entgegen der Wirkung einer federelastischen Rückstellkraft aus der Arretierungsstellung in die Freigabestellung bewegbar ist.

8. Hochdruckreinigungsgerät nach einem der voranstehenden Ansprüche, **dadurch gekennzeichnet, dass** das mindestens eine Arretierungsglied (72, 73) in der Arretierungsstellung mit dem Schubbügel (36) formschlüssig verbunden ist.

9. Hochdruckreinigungsgerät nach einem der voranstehenden Ansprüche, **dadurch gekennzeichnet, dass** das mindestens eine Arretierungsglied (72, 73) in der Arretierungsstellung mit dem Schubbügel (36) verrastet ist.

10. Hochdruckreinigungsgerät nach einem der voranstehenden Ansprüche, **dadurch gekennzeichnet, dass** das Gehäuse (14) einen ersten Führungskanal (90) aufweist, in dem ein Führungsabschnitt (92) des Betätigungsglieds (65) verschiebbar gehalten ist.

11. Hochdruckreinigungsgerät nach Anspruch 10, **dadurch gekennzeichnet, dass** das Gehäuse (14) für jedes Arretierungsglied (72, 73) einen zweiten Führungskanal (87) aufweist, in dem das jeweilige Arretierungsglied (72, 73) verschiebbar gelagert ist.

12. Hochdruckreinigungsgerät nach Anspruch 11, **dadurch gekennzeichnet, dass** der Schubbügel (36) U-förmig ausgestaltet ist und zwei Schenkel (37, 38) aufweist, die über einen Handgriff (39) miteinander verbunden sind, und dass das Gehäuse (14) zwei dritte Führungskanäle (50) aufweist, in denen jeweils ein Schenkel (37, 38) des Schubbügels (36) verschiebbar gelagert ist.

13. Hochdruckreinigungsgerät nach Anspruch 12, **dadurch gekennzeichnet, dass** die vorgefertigte Baueinheit (62) der Arretierungseinrichtung (60) zwei Arretierungsglieder (72, 73) ausbildet, die jeweils über ein Kopplungsglied (69, 70) mit dem Betätigungsglied (65) gelenkig verbunden sind und zur Arretierung des Schubbügels (36) jeweils mit einem Schenkel (37, 38) zusammenwirken.

14. Hochdruckreinigungsgerät nach Anspruch 13, **dadurch gekennzeichnet, dass** die beiden Arretierungsglieder (72, 73) jeweils in einem Führungskanal (87) des Gehäuses (14) verschiebbar gelagert sind.

15. Hochdruckreinigungsgerät nach Anspruch 13 oder 14, **dadurch gekennzeichnet, dass** die beiden Arretierungsglieder (72, 73) entlang einer gemeinsamen Schiebeachse (102) verschiebbar sind.

16. Hochdruckreinigungsgerät nach Anspruch 13, 14 oder 15, **dadurch gekennzeichnet, dass** die beiden Arretierungsglieder (72, 73) spiegelsymmetrisch zu einer Längsachse des Betätigungsglieds (65) angeordnet sind.

17. Hochdruckreinigungsgerät nach einem der Ansprüche 13 bis 16, **dadurch gekennzeichnet, dass** das Gehäuse (14) zwei Halbschalen (41, 42) aufweist, in denen jeweils ein Arretierungsglied (72, 73) verschiebbar gehalten ist.

18. Hochdruckreinigungsgerät nach Anspruch 17, **dadurch gekennzeichnet, dass** die beiden Halbschalen (41, 42) gemeinsam einen Führungskanal (90) ausbilden, in dem das Betätigungsglied (65) verschiebbar gehalten ist.

## Claims

1. High-pressure cleaning appliance comprising a housing (14) having a motor (22) and a pump (24) for a cleaning liquid, driven by the motor (22), arranged therein, and comprising at least two rotatably mounted running wheels (30, 32) for moving the high-pressure cleaning appliance, a push bar (36) movable back and forth between a parking position and an operating position, and a locking device (60) for releasably locking the push bar (36) in the parking position and/or in the operating position, wherein the locking device (60) comprises an actuating member (65) which is coupled by at least one coupling member (69, 70) to at least one locking member (72, 73) which interacts with the push bar (36) and is movable from a locking position to a release position by actuating the actuating member (65), wherein the locking device (60) comprises a prefabricated constructional unit (62) which forms the actuating member (65), the at least one coupling member (69, 70) and the at least one locking member (72, 73) and is movably mounted on or in the housing (14), and wherein the actuating member (65) comprises an actuating ram (67), and in that the at least one coupling member (69, 70) comprises a first and a second end (75, 76; 78, 79), wherein it is articulated at the first end (75; 78) to the actuating ram (67) and at the second end (76; 79) to a locking member (72, 73), **characterized in that** the at least one coupling member (69, 70) is integrally connected to the actuating ram (67) by a film hinge (81, 84) on the ram side, and **in that** the at least one coupling member (69, 70) is integrally connected to a locking member (72, 73) by a film hinge (82, 85) on the locking side.

2. High-pressure cleaning appliance in accordance with Claim 1, **characterized in that** the prefabricated constructional unit (62) is configured as a one-piece plastic molded part.

3. High-pressure cleaning appliance in accordance with Claim 1 or 2, **characterized in that** the actuating member (65) and the at least one locking member (72, 73) are displaceably mounted on the housing (14).

4. High-pressure cleaning appliance in accordance with Claim 3, **characterized in that** the actuating member (65) is displaceable along a first displacement axis (101), and **in that** the at least one locking member (72, 73) is displaceable along a second displacement axis (102), wherein the second displacement axis (102) is aligned at an angle to the first displacement axis (101).

5. High-pressure cleaning appliance in accordance with Claim 4, **characterized in that** the second displacement axis (102) is aligned perpendicularly to the first displacement axis (101).

6. High-pressure cleaning appliance in accordance with Claim 4 or 5, **characterized in that** the first displacement axis (101) is aligned parallel to a longitudinal axis (12) of the high-pressure cleaning appliance (10), which longitudinal axis (12) is aligned vertically in a position of use of the high-pressure cleaning appliance (10).

7. High-pressure cleaning appliance in accordance with any one of the preceding Claims, **characterized in that** the at least one locking member (72, 73) is movable from the locking position to the release position against the action of a spring-elastic restoring force.

8. High-pressure cleaning appliance in accordance with any one of the preceding Claims, **characterized in that** the at least one locking member (72, 73) is connected to the push bar (36) in a positively locking manner in the locking position.

9. High-pressure cleaning appliance in accordance with any one of the preceding Claims, **characterized in that** the at least one locking member (72, 73) is latched to the push bar (36) in the locking position.

10. High-pressure cleaning appliance in accordance with any one of the preceding Claims, **characterized in that** the housing (14) comprises a first guide channel (90) in which a guide section (92) of the actuating member (65) is displaceably held.

11. High-pressure cleaning appliance in accordance with Claim 10, **characterized in that** the housing (14) comprises for each locking member (72, 73) a second guide channel (87) in which the respective locking member (72, 73) is displaceably mounted.

12. High-pressure cleaning appliance in accordance with Claim 11, **characterized in that** the push bar (36) is of U-shaped configuration and has two legs (37, 38) which are connected to each other by a handle (39), and **in that** the housing (14) comprises two third guide channels (50) in each of which a leg (37, 38) of the push bar (36) is displaceably mounted.

13. High-pressure cleaning appliance in accordance with Claim 12, **characterized in that** the prefabricated constructional unit (62) of the locking device (60) forms two locking members (72, 73) which are each articulatedly connected to the actuating member (65) by a coupling member (69, 70) and each interact with a leg (37, 38) to lock the push bar (36).

14. High-pressure cleaning appliance in accordance with Claim 13, **characterized in that** the two locking members (72, 73) are each displaceably mounted in a guide channel (87) of the housing (14).

15. High-pressure cleaning appliance in accordance with Claim 13 or 14, **characterized in that** the two locking members (72, 73) are displaceable along a common displacement axis (102).

16. High-pressure cleaning appliance in accordance with Claim 13, 14 or 15, **characterized in that** the two locking members (72, 73) are arranged mirror-symmetrically in relation to a longitudinal axis of the actuating member (65).

17. High-pressure cleaning appliance in accordance with any one of Claims 13 to 16, **characterized in that** the housing (14) comprises two half-shells (41, 42) in each of which a locking member (72, 73) is displaceably held.

18. High-pressure cleaning appliance in accordance with Claim 17, **characterized in that** the two half-shells (41, 42) jointly form a guide channel (90) in which the actuating member (65) is displaceably held.

## Revendications

1. Appareil de nettoyage haute pression comprenant un carter (14) dans lequel sont agencés un moteur (22) et une pompe (24) entraînée par le moteur (22) pour un liquide de nettoyage, et au moins deux roues (30, 32) montées en rotation et servant à déplacer l'appareil de nettoyage haute pression, un étrier de manoeuvre (36) pouvant être animé d'un mouvement de va-et-vient entre une position d'arrêt et une position de fonctionnement, et un dispositif de blocage (60) pour le blocage libérable de l'étrier de manoeuvre (36) dans la position d'arrêt et/ou dans la position de fonctionnement, le dispositif de blocage (60) comprenant un organe d'actionnement (65) qui est accouplé à au moins un organe de blocage (72, 73) coopérant avec l'étrier de manoeuvre (36) par l'intermédiaire d'au moins un organe d'accouplement (69, 70), lequel organe de blocage peut être déplacé d'une position de blocage dans une position de libération à la suite de l'actionnement de l'organe d'actionnement (65), le dispositif de blocage (60) comportant une unité modulaire préfabriquée (62) qui forme l'organe d'actionnement (65), l'organe ou les organes d'accouplement (69, 70) et l'organe ou les organes de blocage (72, 73) et qui est montée mobile sur ou dans le carter (14) et l'organe d'actionnement (65) comprenant un poussoir d'actionnement (67), et en ce que l'organe ou les organes d'accouplement (69, 70) comportent une première et une deuxième extrémité (75, 76 ; 78, 79), l'organe d'accouplement étant articulé sur le poussoir d'actionnement (67) par la première extrémité (75 ; 78) et sur un organe de blocage (72, 73) par la deuxième extrémité (76 ; 79), **caractérisé en ce que** l'organe ou les organes d'accouplement (69, 70) sont reliés d'un seul tenant au poussoir d'actionnement (67) par une charnière pelliculaire côté poussoir (81, 84) et **en ce que** l'organe ou les organes d'accouplement (69, 70) sont reliés d'un seul tenant à un organe de blocage (72, 73) par l'intermédiaire d'une charnière pelliculaire côté blocage (82, 85).

2. Appareil de nettoyage haute pression selon la revendication 1, **caractérisé en ce que** l'unité modulaire préfabriquée (62) est réalisée sous la forme d'une pièce moulée en matière plastique d'un seul tenant.

3. Appareil de nettoyage haute pression selon la revendication 1 ou 2, **caractérisé en ce que** l'organe d'actionnement (65) et l'organe ou les organes de blocage (72, 73) sont montés coulissants sur le carter (14).

4. Appareil de nettoyage haute pression selon la revendication 3, **caractérisé en ce que** l'organe d'actionnement (65) peut coulisser le long d'un premier axe de coulissement (101) et **en ce que** l'organe ou les organes de blocage (72, 73) peuvent coulisser le long d'un deuxième axe de coulissement (102), le deuxième axe de coulissement (102) étant orienté à un angle par rapport au premier axe de coulissement (101).

5. Appareil de nettoyage haute pression selon la revendication 4, **caractérisé en ce que** le deuxième axe de coulissement (102) est orienté perpendiculairement au premier axe de coulissement (101).

6. Appareil de nettoyage haute pression selon la revendication 4 ou 5, **caractérisé en ce que** le premier axe de coulissement (101) est orienté parallèlement à un axe longitudinal (12) de l'appareil de nettoyage haute pression (10) orienté verticalement dans une position d'utilisation de l'appareil de nettoyage haute pression (10).

7. Appareil de nettoyage haute pression selon l'une quelconque des revendications précédentes, **caractérisé en ce que** l'organe ou les organes de blocage (72, 73) peuvent être déplacés de la position de blocage vers la position de libération à l'encontre de l'action d'une force de rappel élastique.

8. Appareil de nettoyage haute pression selon l'une quelconque des revendications précédentes, **caractérisé en ce que** l'organe ou les organes de blocage (72, 73) sont reliés par coopération de formes à l'étrier de manoeuvre (36) dans la position de blocage.

9. Appareil de nettoyage haute pression selon l'une quelconque des revendications précédentes, **caractérisé en ce que** l'organe ou les organes de blocage (72, 73) sont encliquetés avec l'étrier de manoeuvre (36) dans la position de blocage.

10. Appareil de nettoyage haute pression selon l'une quelconque des revendications précédentes, **caractérisé en ce que** le carter (14) comprend un premier canal de guidage (90) dans lequel une partie de guidage (92) de l'organe d'actionnement (65) est retenue coulissante.

11. Appareil de nettoyage haute pression selon la revendication 10, **caractérisé en ce que** le carter (14) présente pour chaque organe de blocage (72, 73) un deuxième canal de guidage (87) dans lequel chaque organe de blocage (72, 73) est respectivement monté coulissant.

12. Appareil de nettoyage haute pression selon la revendication 11, **caractérisé en ce que** l'étrier de manoeuvre (36) est en forme de U et comprend deux branches (37, 38) qui sont reliées l'une à l'autre par une poignée (39), et **en ce que** le carter (14) comprend deux troisièmes canaux de guidage (50) dans lesquels les branches (37, 38) de l'étrier de manoeuvre (36) sont respectivement montées coulissantes.

13. Appareil de nettoyage haute pression selon la revendication 12, **caractérisé en ce que** l'unité modulaire préfabriquée (62) du dispositif de blocage (60) forme deux organes de blocage (72, 73), qui sont reliés de manière articulée à l'organe d'actionnement (65) respectivement par l'intermédiaire d'un organe d'accouplement (69, 70) et qui coopèrent respectivement avec une branche (37, 38) pour le blocage de l'étrier de manoeuvre (36).

14. Appareil de nettoyage haute pression selon la revendication 13, **caractérisé en ce que** les deux organes de blocage (72, 73) sont montés coulissants respectivement dans un canal de guidage (87) du carter (14).

15. Appareil de nettoyage haute pression selon la revendication 13 ou 14, **caractérisé en ce que** les deux organes de blocage (72, 73) peuvent coulisser le long d'un axe de coulissement (102) commun.

16. Appareil de nettoyage haute pression selon la revendication 13, 14 ou 15, **caractérisé en ce que** les deux organes de blocage (72, 73) sont agencés en symétrie spéculaire par rapport à un axe longitudinal de l'organe d'actionnement (65).

17. Appareil de nettoyage haute pression selon l'une quelconque des revendications 13 à 16, **caractérisé en ce que** le carter (14) comprend deux demi-coques (41, 42) dans lesquelles respectivement un organe de blocage (72, 73) est retenu coulissant.

18. Appareil de nettoyage haute pression selon la revendication 17, **caractérisé en ce que** les deux demi-coques (41, 42) forment un canal de guidage (90) dans lequel l'organe d'actionnement (65) est retenu coulissant.
